# EUROPEAN PATENT APPLICATION

(11) **EP 4 683 302 A1**
(43) Date of publication of application: **21.01.2026**
(21) Application number: 24924265.2
(22) Date of filing: 31.07.2024
(51) Int. Cl.: H04L 67/00

(54) **REMOTE UPGRADE METHOD AND SYSTEM, COMPUTER DEVICE, AND VEHICLE**

(30) Priority: 30.05.2024 CN 202410688373
(71) Applicant: Chongqing Changan Automobile Co., Ltd., Chongqing 400023 (CN)
(72) Inventor: TAN, Chengyu, Jiangbei District, Chongqing 400023 (CN); WANG, Xiangyang, Jiangbei District, Chongqing 400023 (CN); LAI, Shanpeng, Jiangbei District, Chongqing 400023 (CN)
(74) Representative: Keller Schneider Patent- und Markenanwälte AG
(86) International application number: PCT/CN2024/108711
(87) International publication number: WO 2025/246009

(57) **Abstract**

The present application relates to the field of over-the-air (OTA) upgrade technology, and discloses an OTA upgrade method and system, a computer device, and a vehicle. In the present application, a network side is used to generate a first software upgrade count that records a software upgrade count, a software upgrade rollback flag that indicates whether a task is a lower-version software upgrade task, as well as upgrade information, encrypted upgrade information, and a software upgrade package that are required by a vehicle side, so that the vehicle side, upon determining, based on the software upgrade rollback flag, to upgrade to lower-version software, decrypts the encrypted upgrade information sent by the network side to obtain new upgrade information, and performs authentication during the upgrade using a magnitude relationship between the first software upgrade count and a second software upgrade count stored on the vehicle side as well as a corresponding relationship between the new upgrade information and the upgrade information, and upon determining that the OTA upgrade is legitimate, upgrades to the lower-version software using the software upgrade package, thereby ensuring the security and legitimacy of the upgrade when a user upgrades to the lower-version software.

## Description

The present application claims priority to Chinese Patent Application No. 202410688373.6, filed with the China National Intellectual Property Administration on May 30, 2024, and entitled "Over-The Air Upgrade Method and System, Computer Device, and Vehicle", which is incorporated herein by reference in its entirety.

### TECHNICAL FIELD

The present application relates to the field of over-the-air (OTA) upgrade technology, and in particular to an OTA upgrade method and system, a computer device, and a vehicle.

### BACKGROUND

With the rapid development of intelligent connected vehicles, in order to quickly capture the market share, and achieve rapid iteration of functionalities, a common industry practice is to perform rapid over-the-air (OTA) upgrades on the basis of reserved hardware resources, thereby enabling iterative upgrades of intelligent functionalities and timely fixes of vulnerabilities. However, during an OTA upgrade process, issues arise such as insufficient software quality, inadequate testing, instability of a new version, and incompatibility between an upgraded version and other vehicle components. Therefore, in OTA upgrade operations, there is a business requirement to roll back to a lower version. However, according to information security risk analysis, hackers may illegally exploit the system's functional support for upgrading to a lower version to maliciously perform unauthorized upgrades to officially released versions with known vulnerabilities, and then use those vulnerabilities to attack vehicles.

Currently, issues of protecting the legitimacy, integrity, and confidentiality of upgrade packages are often addressed by encryption during the OTA upgrade process. However, regarding potential security vulnerabilities that may arise when users upgrade to lower-version software, it is often impossible to both meet the users' needs for upgrading to lower-version software and avoid such security vulnerabilities that may result from the upgrades.

### SUMMARY OF THE INVENTION

In view of this, the present application provides an over-the-air upgrade method and system, a computer device, and a vehicle, to solve the problem that traditional methods cannot ensure system security when users upgrade to lower-version software.

In a first aspect, the present application provides an over-the air upgrade method applied to a network side. The method includes:
generating a software upgrade key and sending the software upgrade key to a vehicle side;
upon receiving a software upgrade task sent by the vehicle side, updating a first software upgrade count, and detecting whether the software upgrade task is a lower-version software upgrade task to obtain a software upgrade rollback flag;
encrypting upgrade information including the first software upgrade count using the software upgrade key to generate encrypted upgrade information; and
sending the upgrade information, the encrypted upgrade information, the software upgrade rollback flag, and a software upgrade package corresponding to the software upgrade task to the vehicle side, wherein the vehicle side, upon determining, based on the software upgrade rollback flag, to upgrade to lower-version software, decrypts the encrypted upgrade information based on the software upgrade key to obtain new upgrade information and the first software upgrade count, and upon determining that the over-the air (OTA) upgrade is legitimate based on a magnitude relationship between the first software upgrade count and a second software upgrade count stored on the vehicle side as well as a corresponding relationship between the new upgrade information and the upgrade information, upgrades to the lower-version software using the software upgrade package.

A network side is used to generate a first software upgrade count that records a software upgrade count, a software upgrade rollback flag that indicates whether a task is a lower-version software upgrade task, as well as upgrade information, encrypted upgrade information, and a software upgrade package that are required by a vehicle side, so that the vehicle side, upon determining, based on the software upgrade rollback flag, to upgrade to lower-version software, decrypts the encrypted upgrade information sent by the network side, and performs authentication, and upon determining that the OTA upgrade is legitimate, upgrades to the lower-version software using the software upgrade package, thereby ensuring the security and legitimacy of the upgrade when a user upgrades to the lower-version software.

In an optional implementation, the software upgrade key includes a software upgrade master key; the upgrade information further includes software information and certification information for upgrade certification, and the encrypted upgrade information includes encrypted certification information; and encrypting upgrade information including the first software upgrade count using the software upgrade key to generate encrypted upgrade information includes:
generating the certification information based on the software upgrade count;
performing symmetric encryption on the software information using the software upgrade master key to obtain a rollback service key, wherein the software information is generated based on a software upgrade version corresponding to the software upgrade task, a current software version, and the software upgrade rollback flag; and
performing symmetric encryption on the certification information using the rollback service key to obtain the encrypted certification information.

When the certification information for upgrade certification is generated and sent to the vehicle side, the certification information is encrypted to improve transmission security.

In an optional implementation, sending the upgrade information, the encrypted upgrade information, the software upgrade rollback flag, and a software upgrade package corresponding to the software upgrade task to the vehicle side includes:
sending the software information, the certification information, the encrypted certification information, the software upgrade rollback flag, and the software upgrade package corresponding to the software upgrade task to the vehicle side, wherein the vehicle side, upon determining, based on the software upgrade rollback flag, to upgrade to the lower-version software, decrypts the encrypted certification information based on the software upgrade master key and the software information, and extracts the first software upgrade count based on new certification information obtained through the decryption, and upon determining that the OTA upgrade is legitimate based on the magnitude relationship between the first software upgrade count and the second software upgrade count stored on the vehicle side as well as the corresponding relationship between the new certification information and the certification information, upgrades to the lower-version software using the software upgrade package.

In an optional implementation, generating a software upgrade key and sending the software upgrade key to a vehicle side includes:
upon receiving a public key sent by the vehicle side, generating the software upgrade master key and a transmission protection key;
performing asymmetric encryption on the transmission protection key using the public key to obtain a ciphertext transmission protection key, and performing symmetric encryption on the software upgrade master key based on the ciphertext transmission protection key to obtain a ciphertext software upgrade master key; and
sending the ciphertext software upgrade master key and the ciphertext transmission protection key to the vehicle side, so that the vehicle side decrypts the ciphertext transmission protection key using a private key corresponding to the public key to obtain the transmission protection key, and decrypts the ciphertext software upgrade master key based on the transmission protection key to obtain the software upgrade master key.

The network side generates the software upgrade master key, then encrypts the software upgrade master key and sends the encrypted software upgrade master key to the vehicle side, so that the vehicle side decrypts the encrypted software upgrade master key to obtain the software upgrade master key from the network side. In this way, security is improved.

In an optional implementation, the software upgrade key includes an asymmetric key pair composed of a software upgrade public key and a software upgrade private key; the upgrade information further includes certification information for upgrade certification and digest certification information, and the encrypted upgrade information includes signature certification information; and encrypting upgrade information including the first software upgrade count using the software upgrade key to generate encrypted upgrade information includes:
generating the certification information based on the software upgrade count;
performing a digest operation on the certification information to obtain the digest certification information, and performing asymmetric encryption on the digest certification information using the software upgrade private key to obtain the signature certification information.

When the signature certification information for upgrade certification is generated and sent to the vehicle side, encryption and a digest operation are performed on the certification information to improve transmission security.

In an optional implementation, sending the upgrade information, the encrypted upgrade information, the software upgrade rollback flag, and a software upgrade package corresponding to the software upgrade task to the vehicle side includes:
sending the certification information, the signature certification information, the software upgrade rollback flag, and the software upgrade package corresponding to the software upgrade task to the vehicle side, wherein the vehicle side, upon determining, based on the software upgrade rollback flag, to upgrade to the lower-version software, decrypts the signature certification information based on the software upgrade public key to obtain the digest certification information, performs a digest operation on the certification information to obtain new digest certification information, and extracts the first software upgrade count from the certification information, and upon determining that the OTA upgrade is legitimate based on the magnitude relationship between the first software upgrade count and the second software upgrade count stored on the vehicle side as well as the corresponding relationship between the new digest certification information and the digest certification information, upgrades to the lower-version software using the software upgrade package.

In an optional implementation, upon receiving a software upgrade task sent by the vehicle side, updating a first software upgrade count, and detecting whether the software upgrade task is a lower-version software upgrade task to obtain a software upgrade rollback flag includes:
upon receiving the software upgrade task, incrementing the first software upgrade count by one, and obtaining a software upgrade version and a current software version based on the software upgrade task;
if the software upgrade version is detected to be not higher than the current software version, determining that the software upgrade task is a lower-version software upgrade task, and setting the software upgrade rollback flag to one; and
if the software upgrade version is detected to be not higher than the current software version, determining that the software upgrade task is not a lower-version software upgrade task, and setting the software upgrade rollback flag to zero.

By comparing the software upgrade version with the current software version, it is determined whether the vehicle side intends to upgrade to lower-version software, and a software upgrade rollback flag is generated, so that the vehicle side uses the software upgrade rollback flag to determine whether to perform authentication.

In a second aspect, the present application provides an over-the-air upgrade method applied to a vehicle side. The method includes:
receiving a software upgrade key sent by a network side;
sending a software upgrade task to the network side, and receiving upgrade information, encrypted upgrade information, a software upgrade rollback flag, and a software upgrade package corresponding to the software upgrade task, which are returned by the network side, wherein the encrypted upgrade information is obtained by encrypting the upgrade information including a first software upgrade count by the network side using the software upgrade key; the first software upgrade count is obtained by updating a current software upgrade count by the network side after receiving the software upgrade task; and the software upgrade rollback flag is obtained by detecting whether the software upgrade task is a lower-version software upgrade task by the network side;
upon determining, based on the software upgrade rollback flag, to upgrade to lower-version software, decrypting the encrypted upgrade information based on the software upgrade key to obtain new upgrade information and the first software upgrade count stored on the network side; and
upon determining that the over-the-air (OTA) upgrade is legitimate based on a magnitude relationship between the first software upgrade count and a second software upgrade count stored on the vehicle side as well as a corresponding relationship between the new upgrade information and the upgrade information, upgrading to the lower-version software using the software upgrade package.

A network side is used to generate a first software upgrade count that records a software upgrade count, a software upgrade rollback flag that indicates whether a task is a lower-version software upgrade task, as well as upgrade information, encrypted upgrade information, and a software upgrade package that are required by a vehicle side, so that the vehicle side, upon determining, based on the software upgrade rollback flag, to upgrade to lower-version software, decrypts the encrypted upgrade information sent by the network side, and performs authentication, and upon determining that the OTA upgrade is legitimate, upgrades to the lower-version software using the software upgrade package, thereby ensuring the security and legitimacy of the upgrade when a user upgrades to the lower-version software.

In an optional implementation, the software upgrade key includes a software upgrade master key; the upgrade information further includes software information and certification information for upgrade certification, and the encrypted upgrade information includes encrypted certification information; and
receiving upgrade information, encrypted upgrade information, a software upgrade rollback flag, and a software upgrade package corresponding to the software upgrade task, which are returned by the network side includes:
receiving the software information, the certification information, the encrypted certification information, the software upgrade rollback flag, and the software upgrade package corresponding to the software upgrade task, which are returned by the network side; and
decrypting the encrypted upgrade information based on the software upgrade key to obtain new upgrade information and the first software upgrade count stored on the network side includes:
   performing symmetric encryption on the software information based on the software upgrade master key to obtain a rollback service key; and
   decrypting the encrypted certification information using the rollback service key to obtain decrypted new certification information, and extracting the first software upgrade count stored on the network side from the new certification information.

The encrypted information sent by the network side is decrypted using the software upgrade master key so as to facilitate subsequent determination of OTA upgrade legitimacy and improve information transmission security.

In an optional implementation, before upgrading to the lower-version software using the software upgrade package, the method further includes:
if the first software upgrade count is detected to be greater than the second software upgrade count, determining whether the new certification information is consistent with the certification information;
if the new certification information is detected to be consistent with the certification information, determining that the OTA upgrade is legitimate, assigning the value of the first software upgrade count to the second software upgrade count, and performing a step of upgrading to the lower-version software using the software upgrade package; and
if the new certification information is detected to be inconsistent with the certification information, or if the first software upgrade count is detected to be not greater than the second software upgrade count, stopping the upgrade.

The magnitude relationship between the first software upgrade count and the second software upgrade count is determined, and the consistency between the new certification information and the certification information is verified, to determine whether the lower-version upgrade is legitimate. This increases security during the OTA upgrade, and avoids security risks caused by security vulnerabilities in the lower-version software.

In an optional implementation, after receiving the software upgrade key sent by the network side, the method further includes:
obtaining a software upgrade version and a current software version, and comparing the software upgrade version and the current software version to obtain the software upgrade rollback flag used to indicate whether the software upgrade task is a lower-version software upgrade task; and
upon determining, based on the software upgrade rollback flag, to upgrade to a lower version, performing symmetric encryption on the software upgrade version, the current software version, and the software upgrade rollback flag to obtain the rollback service key, and receiving the certification information for upgrade certification, the encrypted certification information, and the software upgrade package, which are input offline by a user, wherein the certification information, the encrypted certification information, and the software upgrade package are obtained by the user from the network side; and
performing a step of decrypting the encrypted certification information using the rollback service key to obtain decrypted new certification information, and subsequent steps.

Accordingly, in an offline scenario, a lower-version legitimate upgrade is performed by receiving the certification information, the encrypted certification information, and the software upgrade package input by the user.

In an optional implementation, the software upgrade key includes an asymmetric key pair composed of a software upgrade public key and a software upgrade private key; the upgrade information further includes certification information for upgrade certification and digest certification information, and the encrypted upgrade information includes signature certification information;
receiving upgrade information, encrypted upgrade information, a software upgrade rollback flag, and a software upgrade package corresponding to the software upgrade task, which are returned by the network side includes:
receiving the certification information, the signature certification information, the software upgrade rollback flag, and the software upgrade package corresponding to the software upgrade task, which are returned by the network side; and
decrypting the encrypted upgrade information based on the software upgrade key to obtain new upgrade information and the first software upgrade count stored on the network side includes:
   decrypting the signature certification information based on the software upgrade public key sent by the network side to obtain the digest certification information, performing a digest operation on the certification information to obtain new digest certification information, and extracting the first software upgrade count from the certification information.

The signature certification information sent by the network side is decrypted using the software update public key so as to facilitate subsequent determination of OTA upgrade legitimacy and improve information transmission security.

In an optional implementation, before upgrading to the lower-version software using the software upgrade package, the method further includes:
if the new digest certification information is detected to be consistent with the digest certification information, determining whether the first software upgrade count is greater than the second software upgrade count;
if the first software upgrade count is detected to be greater than the second software upgrade count, determining that the OTA upgrade is legitimate, assigning the value of the first software upgrade count to the second software upgrade count, and performing a step of upgrading to the lower-version software using the software upgrade package; and
if the first software upgrade count is detected to be not greater than the second software upgrade count, or if the new digest certification information is detected to be inconsistent with the digest certification information, stopping the upgrade.

The magnitude relationship between the first software upgrade count and the second software upgrade count is determined, and the consistency between the new digest certification information and the digest information is verified, to determine whether the lower-version upgrade is legitimate. This increases security during the OTA upgrade, and avoids security risks caused by security vulnerabilities in the lower-version software.

In an optional implementation, after receiving the software upgrade public key sent by the network side, the method further includes:
obtaining a software upgrade version and a current software version, and comparing the software upgrade version and the current software version to obtain the software upgrade rollback flag used to indicate whether the software upgrade task is a lower-version software upgrade task; and
upon determining, based on the software upgrade rollback flag, to upgrade to a lower version, receiving the certification information for upgrade certification, the signature certification information, and the software upgrade package, which are input offline by a user, and performing a step of decrypting the signature certification information based on the software upgrade public key sent by the network side to obtain the digest certification information, and subsequent steps, wherein the certification information, the signature certification information, and the software upgrade package are obtained by the user from the network side.

Accordingly, in an offline scenario, a lower-version legitimate upgrade is performed by receiving the certification information, the signature certification information, and the software upgrade package input by the user.

In a third aspect, the present application provides an over-the-air upgrade system. The system includes a network side and a vehicle side, wherein
the network side is configured to generate a software upgrade key and send the software upgrade key to the vehicle side; upon receiving a software upgrade task sent by the vehicle side, update a first software upgrade count, and detect whether the software upgrade task is a lower-version software upgrade task to obtain a software upgrade rollback flag; encrypt upgrade information including the first software upgrade count using the software upgrade key to generate encrypted upgrade information; and send the upgrade information, the encrypted upgrade information, the software upgrade rollback flag, and a software upgrade package corresponding to the software upgrade task to the vehicle side; and
the vehicle side is configured to, upon determining, based on the software upgrade rollback flag, to upgrade to lower-version software, decrypt the encrypted upgrade information based on the software upgrade key to obtain new upgrade information and the first software upgrade count, and upon determining that the over-the-air (OTA) upgrade is legitimate based on a magnitude relationship between the first software upgrade count and a second software upgrade count stored on the vehicle side as well as a corresponding relationship between the new upgrade information and the upgrade information, upgrade to the lower-version software using the software upgrade package.

The network side is used to generate a first software upgrade count that records a software upgrade count, a software upgrade rollback flag that indicates whether the task is a lower-version software upgrade task, as well as upgrade information, encrypted upgrade information, and a software upgrade package that are required by the vehicle side, so that the vehicle side, upon determining, based on the software upgrade rollback flag, to upgrade to lower-version software, decrypts the encrypted upgrade information to obtain new upgrade information and a first software upgrade count, and upon determining that the OTA upgrade is legitimate based on a magnitude relationship between the first software upgrade count and a second software upgrade count stored on the vehicle side as well as a corresponding relationship between the new upgrade information and the upgrade information, upgrades to the lower-version software using the software upgrade package, thereby ensuring the security and legitimacy of the upgrade when a user upgrades to the lower-version software.

In a fourth aspect, the present application provides a computer device. The computer device includes a first memory and a first processor, wherein the first memory and the first processor are communicatively connected to each other, and the first memory stores first computer instructions, which are executed by the first processor to perform the OTA upgrade method in the first aspect described above or in any implementation corresponding to the first aspect.

In a fifth aspect, the present application provides a vehicle. The vehicle includes a second memory and a second processor, wherein the second memory and the second processor are communicatively connected to each other, and the second memory stores second computer instructions, which are executed by the second processor to perform the OTA upgrade method in the second aspect described above or in any implementation corresponding to the second aspect.

The present application has the following beneficial effects.

The network side is used to generate a first software upgrade count that records a software upgrade count, a software upgrade rollback flag that indicates whether the task is a lower-version software upgrade task, as well as upgrade information, encrypted upgrade information, and a software upgrade package that are required by the vehicle side, so that the vehicle side, upon determining, based on the software upgrade rollback flag, to upgrade to lower-version software, decrypts the encrypted upgrade information sent by the network side to obtain new upgrade information, and performs authentication during the upgrade using a magnitude relationship between the first software upgrade count and a second software upgrade count stored on the vehicle side as well as a corresponding relationship between the new upgrade information and the upgrade information, and upon determining that the OTA upgrade is legitimate, upgrades to the lower-version software using the software upgrade package, thereby ensuring the security and legitimacy of the upgrade when a user upgrades to the lower-version software.

### BRIEF DESCRIPTION OF THE DRAWINGS

In order to more clearly describe the technical solutions in specific implementations of the present application or in the prior art, the drawings for use in the description of the specific implementations or the prior art will be briefly described below. Apparently, the drawings in the following description merely represent some implementations of the present application, and persons of ordinary skill in the art may still derive other drawings from these drawings without creative efforts.
Fig. 1 is a schematic structural diagram of an over-the-air (OTA) upgrade system according to an embodiment of the present application;
Fig. 2 is a schematic structural diagram of another OTA upgrade system according to an embodiment of the present application;
Fig. 3 is a schematic structural diagram of yet another OTA upgrade system according to an embodiment of the present application;
Fig. 4 is a schematic flow diagram of an OTA upgrade method according to an embodiment of the present application;
Fig. 5 is a schematic flow diagram of an OTA online upgrade method based on symmetric authentication according to an embodiment of the present application;
Fig. 6 is a schematic flow diagram of an OTA offline upgrade method based on symmetric authentication according to an embodiment of the present application;
Fig. 7 is a schematic flow diagram of an OTA online upgrade method based on asymmetric authentication according to an embodiment of the present application;
Fig. 8 is a schematic flow diagram of an OTA offline upgrade method based on asymmetric authentication according to an embodiment of the present application;
Fig. 9 is a hardware structure diagram of a computer device in an embodiment of the present application; and
Fig. 10 is a hardware structure diagram of a vehicle in an embodiment of the present application.

### DETAILED DESCRIPTION

In order to make the objects, technical solutions and advantages of the embodiments of the present application clearer, the technical solutions in the embodiments of the present application will be described below clearly and completely with reference to the accompanying drawings in the embodiments of the present application. Apparently, the embodiments described are merely some rather than all of the embodiments of the present application. All other embodiments obtained by those skilled in the art based on the embodiments of the present application without creative efforts fall within the scope of protection of the present application.

During automotive software upgrades, users may need to upgrade to a version lower than a current software version. When upgrading to the software version lower than the current one, traditional methods may introduce security risks due to security vulnerabilities in the lower-version software. Therefore, it is necessary to implement permission control for the upgrade to the legitimate lower-version software, so as to meet the users' need to autonomously and legitimately upgrade to the lower-version software, while preventing other users from illegally upgrading to the lower-version software.

Therefore, embodiments of the present application provide an over-the-air (OTA) upgrade solution, in which whether an OTA upgrade is legitimate is determined based on interaction information between a network side and a vehicle side, and after determining that the OTA upgrade is legitimate, the vehicle side upgrades to lower-version software. This not only meets the user's need to upgrade to the lower-version software, but also ensures security and legitimacy.

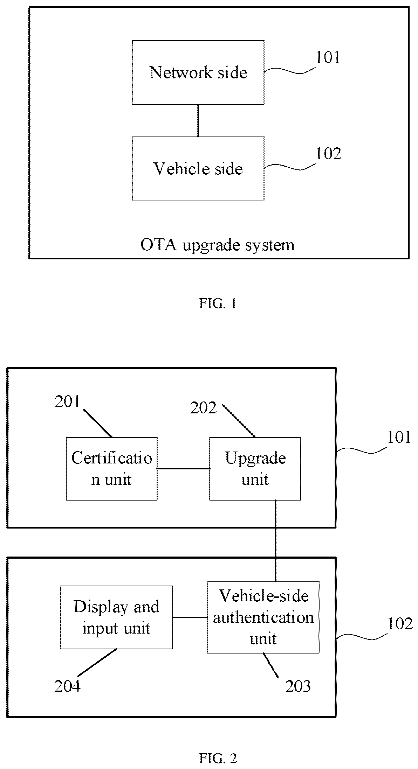

According to embodiments of the present application, an OTA upgrade system is provided. As shown in Fig. 1, the OTA upgrade system includes a network side 101 and a vehicle side 102. The network side 101 is an endpoint that receives vehicle upgrade requests, such as a cloud server, an edge server, etc. The vehicle side 102 may be a vehicle, an in-vehicle system in a vehicle, a controller, or client software installed on a vehicle, etc. The embodiments of the present application are not limited thereto.

The network side 101 is configured to generate a software upgrade key and send the software upgrade key to the vehicle side 102; upon receiving a software upgrade task sent by the vehicle side 102, update a first software upgrade count, and detect whether the software upgrade task is a lower-version software upgrade task to obtain a software upgrade rollback flag; encrypt upgrade information including the first software upgrade count using the software upgrade key to generate encrypted upgrade information; and send the upgrade information, the encrypted upgrade information, the software upgrade rollback flag, and a software upgrade package corresponding to the software upgrade task to the vehicle side 102.

The vehicle side 102 is configured to, upon determining, based on the software upgrade rollback flag, to upgrade to lower-version software, decrypt the encrypted upgrade information based on the software upgrade key to obtain new upgrade information and the first software upgrade count, and upon determining that the OTA upgrade is legitimate based on a magnitude relationship between the first software upgrade count and a second software upgrade count stored on the vehicle side as well as a corresponding relationship between the new upgrade information and the upgrade information, upgrade to the lower-version software using the software upgrade package.

In the OTA upgrade system according to the embodiments of the present application, the network side is used to generate a first software upgrade count that records a software upgrade count, a software upgrade rollback flag that indicates whether the task is a lower-version software upgrade task, as well as upgrade information, encrypted upgrade information, and a software upgrade package that are required by the vehicle side, so that the vehicle side, upon determining, based on the software upgrade rollback flag, to upgrade to lower-version software, decrypts the encrypted upgrade information to obtain new upgrade information and a first software upgrade count, and upon determining that the OTA upgrade is legitimate based on a magnitude relationship between the first software upgrade count and a second software upgrade count stored on the vehicle side as well as a corresponding relationship between the new upgrade information and the upgrade information, upgrades to the lower-version software using the software upgrade package, thereby ensuring the security and legitimacy of the upgrade when a user upgrades to the lower-version software.

In some optional implementations, as shown in Fig. 2, the network side 101 includes a certification unit 201 and an upgrade unit 202, and the vehicle side 102 includes a vehicle-side authentication unit 203 and a display and input unit 204.

It should be noted that when the upgrade unit 202 receives the software upgrade task, it needs to perform a series of security operations, such as encryption and signing, on the software package. At the same time, the vehicle-side authentication unit needs to perform operations such as decryption and signature verification to protect the confidentiality and legitimacy of the upgrade package. The above-described process is necessary for a secure upgrade process. For details, reference may be made to the description of the related art, which will not be repeated here. Implementation steps of the embodiments of the present application are performed based on the above-described process.

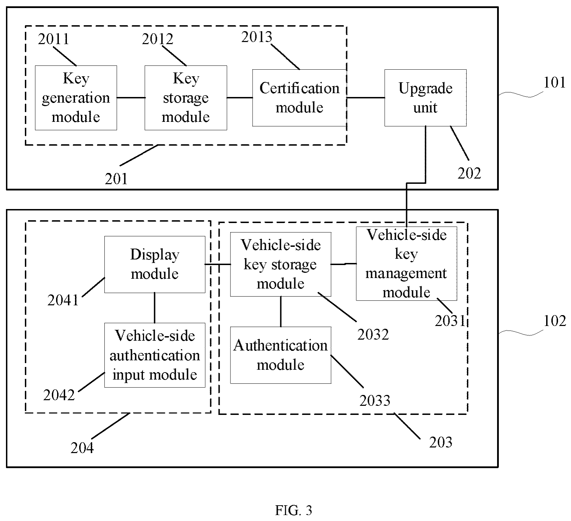

Optionally, as shown in Fig. 3, the certification unit 201 mainly includes a key generation module 2011, a key storage module 2012, and a certification module 2013. The key generation module 2011 is configured to generate a software upgrade key, such as a software upgrade master key, or an asymmetric key pair composed of a software upgrade public key and a software upgrade private key. The key storage module 2012 is configured to store the software upgrade key generated by the key generation module 2011. The certification module 2013 is mainly configured to encrypt upgrade information to obtain encrypted upgrade information.

Optionally, referring again to Fig. 3, the vehicle-side authentication unit 203 mainly includes a vehicle-side key management module 2031, a vehicle-side key storage module 2032, and an authentication module 2033. The vehicle-side authentication unit 203 is configured to determine whether an operation on lower-version software is legitimate during a software upgrade process. The vehicle-side key management module 2031 is configured to receive information sent by the network side. The vehicle-side key storage module 2032 is configured to store the information sent by the network side. The authentication module 2033 is configured to decrypt the information sent by the network side and determine whether the OTA upgrade is legitimate based on the decrypted information.

Referring again to Fig. 3, the display and input unit 204 mainly includes a display module 2041 and a vehicle-side authentication input module 2042. The vehicle-side authentication input module 2042 is configured to receive the information input by a user. The display module 2041 is configured to display the information.

In addition, the upgrade unit 202 manages the first software upgrade count stored on the network side using OTA_COUNT, with an initial value of 0; and the authentication module 2033 on the vehicle side manages the second software upgrade count stored on the vehicle side using V_OTA_COUNT, with an initial value of 0.

According to embodiments of the present application, an OTA upgrade method embodiment is provided. It should be noted that steps illustrated in flow diagrams of the accompanying drawings may be performed in a computer system, such as one including a set of computer executable instructions, and although a logical order is illustrated in the flow diagrams, in some cases, the steps illustrated or described may be performed in an order different from that presented herein.

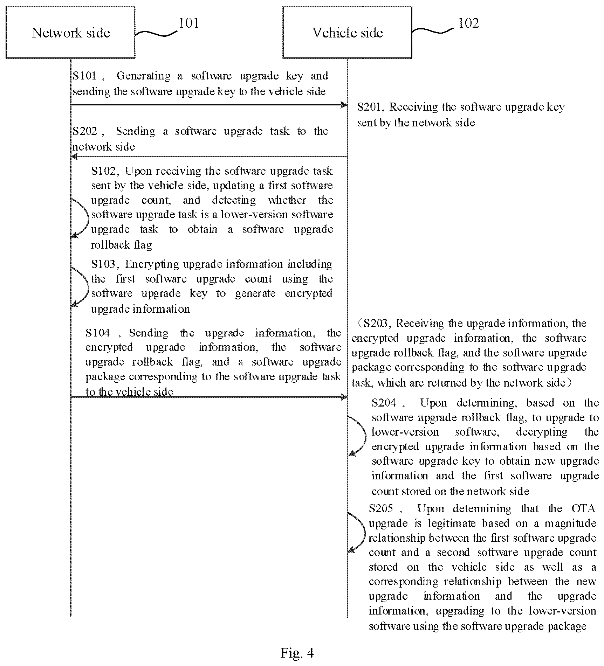

In this embodiment, an OTA upgrade method is provided. The method may be used for the network side 101 and the vehicle side 102 as shown in Fig. 1. Fig. 4 is a schematic diagram of an interaction process of the OTA upgrade system according to embodiments of the present application. The network side 101 is configured to perform steps S101 to S104, and the vehicle side 102 is configured to perform steps S201 to S205. The specific interaction process between the network side 101 and the vehicle side 102 is as follows.

Step S101: generating a software upgrade key and sending the software upgrade key to the vehicle side.

Specifically, the embodiments of the present application are mainly divided into two schemes: symmetric authentication and asymmetric authentication. In the symmetric authentication scheme, the network side generates a software upgrade master key, and encrypts and sends the software upgrade master key to the vehicle side. In the asymmetric authentication scheme, the network side generates an asymmetric key pair composed of a software upgrade public key and a software upgrade private key, and sends the software upgrade public key to the vehicle side.

Step S201: receiving the software upgrade key sent by the network side.

Specifically, in the symmetric authentication scheme, the vehicle side receives ciphertext obtained by encrypting the software upgrade master key by the network side, and decrypts the ciphertext to obtain the software upgrade master key. In the asymmetric authentication scheme, the vehicle side receives the software upgrade public key sent by the network side. The software upgrade public key corresponds to the software upgrade private key of the network side.

It should be noted that steps S101 and S201 are essentially a process of initializing the network side and the vehicle side. During the initialization process, the network side and the vehicle side are communicatively connected. Upon completion of initialization, the vehicle may upgrade online, or may obtain data required for the upgrade offline. During an offline upgrade process, the vehicle side may disable the communication connection with the network side.

In addition, during the initialization, the network side manages the first software upgrade count using OTA_COUNT, with an initial value of 0; and the vehicle side manages the second software upgrade count using V_OTA_COUNT, with an initial value of 0.

Step S202: sending a software upgrade task to the network side.

Specifically, the vehicle side generates the software upgrade task based on information such as a current software version installed on a controller, and a required software upgrade version, and sends an upgrade request to the network side.

Step S102: upon receiving the software upgrade task sent by the vehicle side, updating a first software upgrade count, and detecting whether the software upgrade task is a lower-version software upgrade task to obtain a software upgrade rollback flag.

Specifically, each time a software upgrade task is received, the network side records the first software upgrade count, determines whether the vehicle side intends to upgrade to lower-version software, and generates a software upgrade rollback flag, so that the vehicle side uses the software upgrade rollback flag to determine whether to perform authentication.

In some optional implementations, the above-described step S102 includes the following steps.

Step a1: upon receiving the software upgrade task, incrementing the first software upgrade count by one, and obtaining a software upgrade version and a current software version based on the software upgrade task.

Step a2: if the software upgrade version is detected to be not higher than the current software version, determining that the software upgrade task is a lower-version software upgrade task, and setting the software upgrade rollback flag to one.

Step a3: if the software upgrade version is detected to be not higher than the current software version, determining that the software upgrade task is not a lower-version software upgrade task, and setting the software upgrade rollback flag to zero.

Exemplarily, referring again to Fig. 2, when receiving the software upgrade task, the upgrade unit increments a counter OTA_COUNT that indicates the first software upgrade count by 1, and then determines the software upgrade version number. If the software upgrade version is higher than the current software version on the vehicle controller, the upgrade unit sets the software upgrade rollback flag RE_OTA_FLAG to 0. If the software upgrade version is lower than or equal to the current software version on the vehicle controller, the upgrade unit sets RE_OTA_FLAG to 1.

Step S103: encrypting upgrade information including the first software upgrade count using the software upgrade key to generate encrypted upgrade information.

Specifically, in the symmetric authentication scheme, the upgrade information mainly includes the first software upgrade count, software information, and certification information for upgrade certification. The encrypted upgrade information mainly includes encrypted certification information obtained by encrypting the certification information. In the asymmetric authentication scheme, the upgrade information mainly includes the first software upgrade count, the certification information for upgrade certification, and digest certification information. The digest certification information is obtained by encrypting the certification information. The encrypted upgrade information mainly includes signature certification information obtained by encrypting the digest certification information.

Step S104: sending the upgrade information, the encrypted upgrade information, the software upgrade rollback flag, and a software upgrade package corresponding to the software upgrade task to the vehicle side.

Specifically, in the symmetric authentication scheme, the network side sends the software information, the certification information, the encrypted certification information, the software upgrade rollback flag, and the software upgrade package corresponding to the software upgrade task to the vehicle side. In the asymmetric authentication scheme, the network side sends the certification information, the signature certification information, the software upgrade rollback flag, and the software upgrade package corresponding to the software upgrade task to the vehicle side.

Step S203: receiving the upgrade information, the encrypted upgrade information, the software upgrade rollback flag, and the software upgrade package corresponding to the software upgrade task, which are returned by the network side.

Step S204: upon determining, based on the software upgrade rollback flag, to upgrade to lower-version software, decrypting the encrypted upgrade information based on the software upgrade key to obtain new upgrade information and the first software upgrade count stored on the network side.

Specifically, the vehicle side decrypts the encrypted upgrade information based on the software upgrade master key or the software upgrade public key so as to obtain the new upgrade information and the first software upgrade count OTA_COUNT on the network side.

Step S205: upon determining that the OTA upgrade is legitimate based on a magnitude relationship between the first software upgrade count and a second software upgrade count stored on the vehicle side as well as a corresponding relationship between the new upgrade information and the upgrade information, upgrading to the lower-version software using the software upgrade package.

Specifically, the vehicle side determines whether the OTA upgrade is legitimate based on the magnitude relationship between the first software upgrade count OTA_COUNT and the second software upgrade count V_OTA_COUNT, as well as the corresponding relationship between the new upgrade information and the upgrade information. Only when the OTA upgrade is legitimate will the vehicle be allowed to upgrade to the lower-version software using the software upgrade package.

In the OTA upgrade method according to the embodiments of the present application, the network side is used to generate a first software upgrade count that records a software upgrade count, a software upgrade rollback flag that indicates whether the task is a lower-version software upgrade task, as well as upgrade information, encrypted upgrade information, and a software upgrade package that are required by the vehicle side, so that the vehicle side, upon determining, based on the software upgrade rollback flag, to upgrade to lower-version software, decrypts the encrypted upgrade information to obtain new upgrade information and a first software upgrade count, and upon determining that the OTA upgrade is legitimate based on a magnitude relationship between the first software upgrade count and a second software upgrade count stored on the vehicle side as well as a corresponding relationship between the new upgrade information and the upgrade information, upgrades to the lower-version software using the software upgrade package, thereby ensuring the security and legitimacy of the upgrade when a user upgrades to the lower-version software.

According to the embodiments of the present application, when a user upgrades software to a version lower than the current software version, permission control is implemented for the upgrade to the legitimate lower-version software, so as to meet the user's need to autonomously and legitimately upgrade to the lower-version software, while preventing other unauthorized users from illegally upgrading to the lower-version software, thus avoiding security risks caused by security vulnerabilities in the lower-version software.

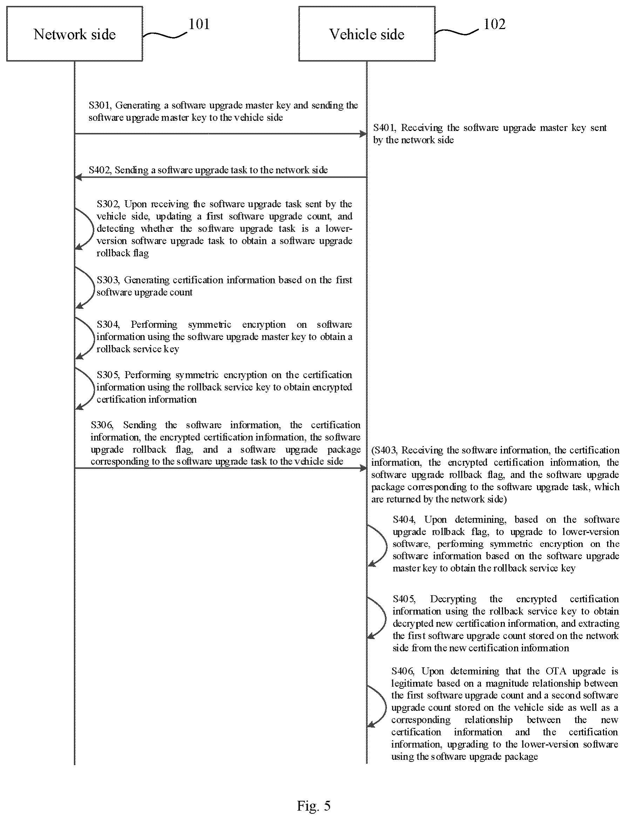

In this embodiment, an OTA upgrade method is provided. The method may be used for the network side 101 and the vehicle side 102 shown in Fig. 1. Fig. 5 is a schematic diagram of an interaction process of the OTA upgrade system according to embodiments of the present application. The network side 101 is configured to perform steps S301 to S306, and the vehicle side 102 is configured to perform steps S401 to S406. The specific interaction process between the network side 101 and the vehicle side 102 is as follows.

Step S301: generating a software upgrade master key and sending the software upgrade master key to the vehicle side.

In some optional implementations, the above-described step S301 includes the following steps:
Step b1: upon receiving a public key sent by the vehicle side, generating the software upgrade master key and a transmission protection key.
Step b2: performing asymmetric encryption on the transmission protection key using the public key to obtain a ciphertext transmission protection key, and performing symmetric encryption on the software upgrade master key based on the ciphertext transmission protection key to obtain a ciphertext software upgrade master key.
Step b3: sending the ciphertext software upgrade master key and the ciphertext transmission protection key to the vehicle side.

Exemplarily, referring again to Fig. 3, the vehicle-side key management module generates asymmetric keys. A private key SK is securely stored in the vehicle-side key management module, and a public key PK is sent to the certification unit offline or online to request OTA_MASTER_KEY from the certification unit.

Referring again to Fig. 3, the certification unit invokes the key generation module to randomly generate a 128-bit or 256-bit random number as the software upgrade master key OTA_MASTER_KEY. OTA_MASTER_KEY is securely stored in the key storage module and cannot be exported in plaintext. Generally, the key generation module may be implemented using a hardware security module (HSM) device. Then, the certification unit invokes the key generation module to randomly generate a 128-bit or 256-bit random number as the transmission protection key TRANS_KEY. TRANS _KEY is used to encrypt and protect OTA_MASTER_KEY.

Optionally, after receiving the public key PK, the certification unit performs asymmetric encryption on the transmission protection key TRANS _KEY using PK to obtain the ciphertext transmission protection key ENC_TRANS_KEY. An asymmetric encryption algorithm may be a commonly used and secure algorithm such as the Rivest-Shamir-Adleman algorithm (RSA) and the elliptic curve cryptography (ECC). The embodiments of the present application are not limited thereto.

Next, the software upgrade master key OTA_MASTER_KEY is symmetrically encrypted using the ciphertext transmission protection key ENC _TRANS _KEY to obtain the ciphertext software upgrade master key ENC_OTA_MASTER_KEY. Exemplarily, a symmetric encryption algorithm may be a commonly used and secure algorithm such as the advanced encryption standard (AES) and the SM4 block cipher algorithm (SM4). The embodiments of the present application are not limited thereto. Finally, ENC_TRANS_KEY and ENC_OTA_MASTER_KEY are sent to the vehicle-side key management module.

Step S401: receiving the software upgrade master key sent by the network side.

In some optional implementations, the vehicle side decrypts the ciphertext transmission protection key using the private key corresponding to the public key to obtain the transmission protection key, and decrypts the ciphertext software upgrade master key based on the transmission protection key to obtain the software upgrade master key.

For example, the vehicle-side key management module invokes the private key SK to decrypt the ciphertext transmission protection key ENC_TRANS_KEY to obtain the transmission protection key TRANS_KEY, then uses the obtained transmission protection key TRANS_KEY to decrypt the ciphertext software upgrade master key ENC_OTA_MASTER_KEY to obtain the software upgrade master key OTA_MASTER_KEY, and securely stores the obtained software upgrade master key OTA_MASTER_KEY in the vehicle-side key storage module.

The network side generates the software upgrade master key, then encrypts the software upgrade master key and sends the encrypted software upgrade master key to the vehicle side, so that the vehicle side decrypts the encrypted software upgrade master key to obtain the software upgrade master key from the network side. In this way, security is improved.

Step S402: sending a software upgrade task to the network side. See step S202 of the embodiment shown in Fig. 4 for details, which will not be repeated here.

Step S302: upon receiving the software upgrade task sent by the vehicle side, updating a first software upgrade count, and detecting whether the software upgrade task is a lower-version software upgrade task to obtain a software upgrade rollback flag. See step S102 of the embodiment shown in Fig. 4 for details, which will not be repeated here.

Step S303: generating certification information based on the first software upgrade count.

Specifically, the certification information CERT_INFO is information used by the vehicle-side authentication module to determine whether the execution of the OTA upgrade process is a legitimate act. Its content mainly consists of a random number RNG and the first software upgrade count OTA_COUNT.

Step S304: performing symmetric encryption on software information using the software upgrade master key to obtain a rollback service key.

In some optional implementations, referring again to Fig. 3, the upgrade unit generates the software information SOFT_INFO and the certification information CERT_INFO, and then sends the software information SOFT_INFO and the certification information CERT_INFO for certification to the certification module in the certification unit. The certification module invokes OTA_MASTER_KEY to perform a secure operation on SOFT_INFO based on a symmetric encryption algorithm, to obtain the rollback service key OTA_RE_KEY for a current software version.

The software information SOFT_INFO is a derivation factor used to generate OTA_RE_KEY, a per-upgrade one-time key, related to the upgrade service. It consists of information such as a software version number SOFT_VN (including the current software version and a software upgrade version) and the software upgrade rollback flag RE_OTA_FLAG.

Step S305: performing symmetric encryption on the certification information using the rollback service key to obtain encrypted certification information.

In some optional implementations, referring again to Fig. 3, the certification unit invokes the rollback service key OTA_RE_KEY to perform a secure operation on the certification information CERT_INFO based on a symmetric encryption algorithm, to obtain the encrypted certification information ENC_CERT_INFO, and then returns ENC_CERT_INFO to the upgrade unit.

When the certification information for upgrade certification is generated and sent to the vehicle side, the certification information is encrypted to improve transmission security.

Step S306: sending the software information, the certification information, the encrypted certification information, the software upgrade rollback flag, and a software upgrade package corresponding to the software upgrade task to the vehicle side.

Exemplarily, referring again to Fig. 3, upon receiving the encrypted certification information ENC_CERT_INFO, the upgrade unit delivers the encrypted certification information ENC_CERT_INFO, the certification information CERT_INFO, the software information SOFT_INFO, the software upgrade package, and the software upgrade rollback flag RE_OTA_FLAG to the vehicle-side authentication unit via an OTA channel.

Step S403: receiving the software information, the certification information, the encrypted certification information, the software upgrade rollback flag, and the software upgrade package corresponding to the software upgrade task, which are returned by the network side.

Step S404: upon determining, based on the software upgrade rollback flag, to upgrade to lower-version software, performing symmetric encryption on the software information based on the software upgrade master key to obtain the rollback service key.

Specifically, the software upgrade rollback flag is used to indicate a software upgrade status. When its value is 0, it indicates that the upgrade version is higher than the current software version on the vehicle side, indicating a normal software upgrade process. When its value is 1, it indicates that the upgrade version is lower than the current software version on the vehicle side, indicating a special upgrade process, and the vehicle side needs to authenticate the upgrade process to determine whether the lower-version OTA upgrade is legitimate.

Exemplarily, referring again to Fig. 3, when the vehicle-side authentication unit determines that RE_OTA_FLAG=0, it indicates a normal upgrade process, and the process is allowed to proceed; and when RE_OTA_FLAG=1, it indicates a special upgrade process, and authentication is required. When the vehicle-side authentication unit determines that authentication is required, the authentication module first invokes the software upgrade master key OTA_MASTER_KEY to perform a secure operation on the software information SOFT_INFO based on a symmetric encryption algorithm, using the same operation method as that by which the certification module calculates OTA_RE_KEY, to obtain the rollback service key OTA_RE_KEY.

Step S405: decrypting the encrypted certification information using the rollback service key to obtain decrypted new certification information, and extracting the first software upgrade count stored on the network side from the new certification information.

Exemplarily, referring again to Fig. 3, the authentication module invokes the rollback service key OTA_RE_KEY to decrypt the encrypted certification information ENC_CERT_INFO, to obtain the new CERT_INFO', and extracts the first software upgrade count OTA_COUNT from the new CERT_INFO'.

The encrypted information sent by the network side is decrypted using the software upgrade master key so as to facilitate subsequent determination of OTA upgrade legitimacy and improve information transmission security.

Step S406: upon determining that the OTA upgrade is legitimate based on a magnitude relationship between the first software upgrade count and a second software upgrade count stored on the vehicle side as well as a corresponding relationship between the new certification information and the certification information, upgrading to the lower-version software using the software upgrade package.

In some optional implementations, the above-described step S406 includes the following steps.

Step c1: if the first software upgrade count is detected to be greater than the second software upgrade count, determining whether the new certification information is consistent with the certification information.

Step c2: if the new certification information is detected to be consistent with the certification information, determining that the OTA upgrade is legitimate, assigning the value of the first software upgrade count to the second software upgrade count, and performing a step of upgrading to the lower-version software using the software upgrade package.

Step c3: if the new certification information is detected to be inconsistent with the certification information, or if the first software upgrade count is detected to be not greater than the second software upgrade count, stopping the upgrade.

For example, referring again to Fig. 3, after extracting the first software upgrade count OTA_COUNT from the new CERT_INFO', the authentication module compares the first software upgrade count with the second software upgrade count V_OTA_COUNT securely stored in the authentication module. If OTA_COUNT > V_OTA_COUNT, CERT_INFO' is compared with the delivered CERT_INFO. If they are the same, the lower-version upgrade is determined to be a legitimate act, and the value of OTA_COUNT is assigned to V_OTA_COUNT. If CERT _INFO' is not the same as the delivered CERT_INFO, the upgrade is determined to be abnormal, and this upgrade is interrupted. If OTA_COUNT ≤ V_OTA_COUNT, the upgrade is determined to be illegitimate, and the upgrade is terminated.

The magnitude relationship between the first software upgrade count and the second software upgrade count is determined, and the consistency between the new certification information and the certification information is verified, to determine whether the lower-version upgrade is legitimate. This increases security during the OTA upgrade, and avoids security risks caused by security vulnerabilities in the lower-version software.

In the OTA upgrade method according to the embodiments of the present application, the network side is used to generate a first software upgrade count that records a software upgrade count, a software upgrade rollback flag that indicates whether the task is a lower-version software upgrade task, as well as software information, certification information, encrypted certification information, and a software upgrade package that are required by the vehicle side, so that the vehicle side, upon determining, based on the software upgrade rollback flag, to upgrade to lower-version software, decrypts the encrypted certification information to obtain new certification information and a first software upgrade count, and upon determining that the OTA upgrade is legitimate based on a magnitude relationship between the first software upgrade count and a second software upgrade count stored on the vehicle side as well as a corresponding relationship between the new certification information and the certification information, upgrades to the lower-version software using the software upgrade package, thereby ensuring the security and legitimacy of the upgrade when a user upgrades to the lower-version software.

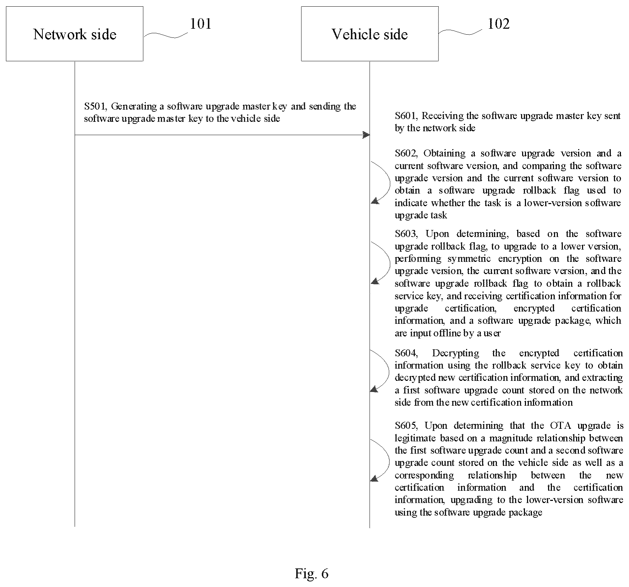

In this embodiment, an OTA upgrade method is provided. The method may be used for the network side 101 and the vehicle side 102 shown in Fig. 1. Fig. 6 is a schematic diagram of an interaction process of the OTA upgrade system according to embodiments of the present application. The network side 101 is configured to perform step S501, and the vehicle side 102 is configured to perform steps S601 to S605. The specific interaction process between the network side 101 and the vehicle side 102 is as follows.

Step S501: generating a software upgrade master key and sending the software upgrade master key to the vehicle side. See step S301 of the embodiment shown in Fig. 5 for details, which will not be repeated here.

Step S601: receiving the software upgrade master key sent by the network side. See step S401 of the embodiment shown in Fig. 5 for details, which will not be repeated here.

Step S602: obtaining a software upgrade version and a current software version, and comparing the software upgrade version and the current software version to obtain a software upgrade rollback flag used to indicate whether the task is a lower-version software upgrade task.

Specifically, during the software upgrade process, the vehicle-side authentication unit determines the software version number. If the software upgrade version is higher than the current software version on the vehicle side, it indicates a normal upgrade process, and the process is allowed to proceed. If the software upgrade version is lower than or equal to the current software version on the vehicle side, it indicates a special upgrade process, and authentication is required to determine whether the lower-version OTA upgrade is legitimate, thereby obtaining the software upgrade rollback flag RE_OTA_FLAG used to indicate whether the task is a lower-version software upgrade task.

Step S603: upon determining, based on the software upgrade rollback flag, to upgrade to a lower version, performing symmetric encryption on the software upgrade version, the current software version, and the software upgrade rollback flag to obtain a rollback service key, and receiving certification information for upgrade certification, encrypted certification information, and a software upgrade package, which are input offline by a user.

Exemplarily, referring again to Fig. 3, when the vehicle-side authentication unit determines that authentication is required, the authentication module invokes OTA_MASTER_KEY to perform a secure operation on the software upgrade rollback flag RE_OTA_FLAG, and the software version number SOFT_VN, which includes the software upgrade version and the current software version, based on a symmetric encryption algorithm, to obtain the rollback service key OTA_RE_KEY, and then prompts the user through a display interface to input the certification information CERT_INFO, the encrypted certification information ENC_CERT_INFO, and the software upgrade package. The symmetric encryption operation is performed using the same method as that by which the certification module calculates OTA_RE_KEY.

It should be noted that the certification information, the encrypted certification information, and the software upgrade package are obtained by the user from the network side. The user may input the software upgrade task from the vehicle side into the network side. After obtaining data such as the encrypted certification information ENC_CERT_INFO, the upgrade unit on the network side provides the encrypted certification information ENC_CERT_INFO, the certification information CERT_INFO, and the software upgrade package to the user in an offline manner.

Accordingly, in an offline scenario, a lower-version legitimate upgrade is performed by receiving the certification information, the encrypted certification information, and the software upgrade package input by the user.

Step S604: decrypting the encrypted certification information using the rollback service key to obtain decrypted new certification information, and extracting a first software upgrade count stored on the network side from the new certification information. See step S405 of the embodiment shown in Fig. 5 for details, which will not be repeated here.

Step S605: upon determining that the OTA upgrade is legitimate based on a magnitude relationship between the first software upgrade count and a second software upgrade count stored on the vehicle side as well as a corresponding relationship between the new certification information and the certification information, upgrading to the lower-version software using the software upgrade package. See step S406 of the embodiment shown in Fig. 5 for details, which will not be repeated here.

In the OTA upgrade method according to the embodiments of the present application, the network side is used to generate a software upgrade master key, and the vehicle side receives software information, certification information, encrypted certification information, and a software upgrade package, which are input offline by a user, so that the vehicle side, upon determining, based on the software upgrade rollback flag, to upgrade to lower-version software, decrypts the encrypted certification information using the software upgrade master key to obtain new certification information and a first software upgrade count, and upon determining that the OTA upgrade is legitimate based on a magnitude relationship between the first software upgrade count and a second software upgrade count stored on the vehicle side as well as a corresponding relationship between the new certification information and the certification information, upgrades to the lower-version software using the software upgrade package, thereby ensuring the security and legitimacy of the upgrade when the user upgrades to the lower-version software.

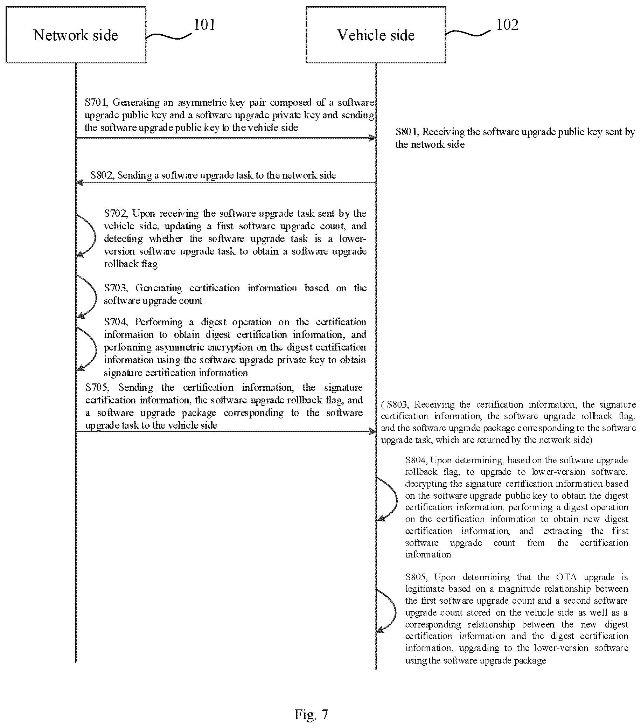

In this embodiment, an OTA upgrade method is provided. The method may be used for the network side 101 and the vehicle side 102 shown in Fig. 1. Fig. 7 is a schematic diagram of an interaction process of the OTA upgrade system according to embodiments of the present application. The network side 101 is configured to perform steps S701 to S705, and the vehicle side 102 is configured to perform steps S801 to S805. The specific interaction process between the network side 101 and the vehicle side 102 is as follows.

Step S701: generating an asymmetric key pair composed of a software upgrade public key and a software upgrade private key and sending the software upgrade public key to the vehicle side.

In some optional implementations, referring again to Fig. 3, the certification unit invokes the key generation module to randomly generate the asymmetric key pair composed of the software upgrade public key OTA_MASTER_KEY_P and the software upgrade private key OTA_MASTER_KEY_S. OTA_MASTER_KEY_S is securely stored in the key storage module and cannot be exported in plaintext, and OTA_MASTER_KEY_P is sent to the vehicle side. Exemplarily, the key generation module is implemented using a hardware security module (HSM) device.

Step S801: receiving the software upgrade public key sent by the network side.

Specifically, the certification unit on the network side sends the public key OTA_MASTER_KEY_P offline to the vehicle-side authentication unit, and the vehicle-side authentication unit securely stores OTA_MASTER_KEY_P in the vehicle-side key management module.

Step S802: sending a software upgrade task to the network side. See step S402 of the embodiment shown in Fig. 5 for details, which will not be repeated here.

Step S702: upon receiving the software upgrade task sent by the vehicle side, updating a first software upgrade count, and detecting whether the software upgrade task is a lower-version software upgrade task to obtain a software upgrade rollback flag. See step S302 of the embodiment shown in Fig. 5 for details, which will not be repeated here.

Step S703: generating certification information based on the first software upgrade count. See step S303 of the embodiment shown in Fig. 5 for details, which will not be repeated here.

Step S704: performing a digest operation on the certification information to obtain digest certification information, and performing asymmetric encryption on the digest certification information using the software upgrade private key to obtain signature certification information.

In some optional implementations, referring again to Fig. 3, the upgrade unit sends the certification information CERT_INFO for certification to the certification module in the certification unit. The certification module performs the digest operation on CERT_INFO to obtain the digest certification information DIG_CERT_INFO. A digest operation algorithm used may be any commonly used and secure digest algorithm, such as SHA256, SM3, etc. The embodiments of the present application are not limited thereto. Then, the software upgrade private key OTA_MASTER_KEY_S is invoked to perform a secure operation on the digest certification information DIG_CERT_INFO based on an asymmetric encryption algorithm, to obtain the signature certification information SIG_CERT_INFO. Then, SIG_CERT_INFO is returned to the upgrade unit.

When the signature certification information for upgrade certification is generated and sent to the vehicle side, encryption and a digest operation are performed on the certification information to improve transmission security.

Step S705: sending the certification information, the signature certification information, the software upgrade rollback flag, and a software upgrade package corresponding to the software upgrade task to the vehicle side.

For example, referring again to Fig. 3, upon receiving the signature certification information SIG_CERT_INFO, the upgrade unit delivers the signature certification information SIG_CERT_INFO, the certification information CERT_INFO, the software upgrade rollback flag, and the software upgrade package to the vehicle-side authentication unit via an OTA channel.

Step S803: receiving the certification information, the signature certification information, the software upgrade rollback flag, and the software upgrade package corresponding to the software upgrade task, which are returned by the network side.

Step S804: upon determining, based on the software upgrade rollback flag, to upgrade to lower-version software, decrypting the signature certification information based on the software upgrade public key to obtain the digest certification information, performing a digest operation on the certification information to obtain new digest certification information, and extracting the first software upgrade count from the certification information.

Specifically, the software upgrade rollback flag is used to indicate a software upgrade status. When its value is 0, it indicates that the upgrade version is higher than the current software version on the vehicle side, indicating a normal software upgrade process. When its value is 1, it indicates that the upgrade version is lower than the current software version on the vehicle side, indicating a special upgrade process, and the vehicle side needs to authenticate the upgrade process to determine whether the lower-version OTA upgrade is legitimate.

Exemplarily, referring again to Fig. 3, when the vehicle-side authentication unit determines that RE_OTA_FLAG=0, it indicates a normal upgrade process, and the process is allowed to proceed; and when RE_OTA_FLAG=1, it indicates a special upgrade process, and authentication is required. When the vehicle-side authentication unit determines that authentication is required, the authentication module invokes the software upgrade public key OTA_MASTER_KEY_P to decrypt the signature certification information SIG_CERT_INFO, to obtain the digest certification information DIG_CERT_INFO, and then performs the digest operation on the received certification information CERT_INFO to obtain the new digest certification information DIG_CERT_INFO'. The digest operation is performed using the same method as the algorithm used by the certification module. In addition, the first software upgrade count is extracted from the certification information CERT_INFO.

The signature certification information sent by the network side is decrypted using the software update public key so as to facilitate subsequent determination of OTA upgrade legitimacy and improve information transmission security.

Step S805: upon determining that the OTA upgrade is legitimate based on a magnitude relationship between the first software upgrade count and a second software upgrade count stored on the vehicle side as well as a corresponding relationship between the new digest certification information and the digest certification information, upgrading to the lower-version software using the software upgrade package.

In some optional implementations, the above-described step S805 includes the following steps.

Step d1: if the new digest certification information is detected to be consistent with the digest certification information, determining whether the first software upgrade count is greater than the second software upgrade count.

Step d2: if the first software upgrade count is detected to be greater than the second software upgrade count, determining that the OTA upgrade is legitimate, assigning the value of the first software upgrade count to the second software upgrade count, and performing a step of upgrading to the lower-version software using the software upgrade package.

Step d3: if the first software upgrade count is detected to be not greater than the second software upgrade count, or if the new digest certification information is detected to be inconsistent with the digest certification information, stopping the upgrade.

For example, the authentication module compares the new digest certification information DIG_CERT_INFO' with the digest certification information DIG_CERT_INFO. If they are different, the upgrade is terminated. If they are the same, the first software upgrade count OTA_COUNT is compared with the second software upgrade count V_OTA_COUNT securely stored in the authentication module. If OTA_COUNT > V_OTA_COUNT, it is determined that this lower-version upgrade is a legitimate act, and the value of OTA_COUNT is assigned to V_OTA_COUNT. If OTA_COUNT ≤ V_OTA_COUNT, the upgrade is determined to be illegitimate, and the upgrade is terminated.

The magnitude relationship between the first software upgrade count and the second software upgrade count is determined, and the consistency between the new digest certification information and the digest information is verified, so as to determine whether the lower-version upgrade is legitimate. This increases security during the OTA upgrade, and avoids security risks caused by security vulnerabilities in the lower-version software.

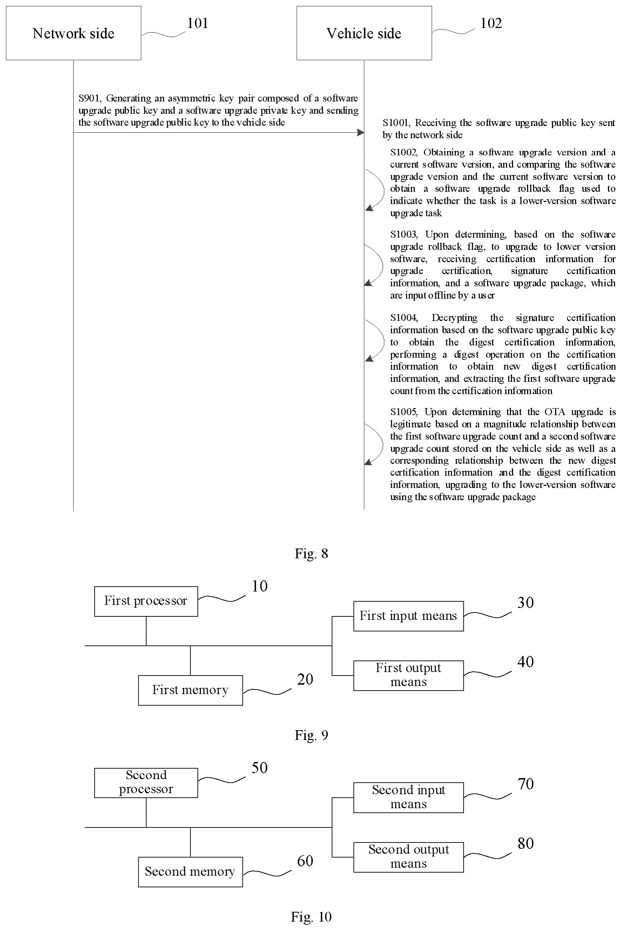

In this embodiment, an OTA upgrade method is provided. The method may be used for the network side 101 and the vehicle side 102 shown in Fig. 1. Fig. 8 is a schematic diagram of an interaction process of the OTA upgrade system according to embodiments of the present application. The network side 101 is configured to perform step S901, and the vehicle side 102 is configured to perform steps S1001 to S1005. The specific interaction process between the network side 101 and the vehicle side 102 is as follows.

Step S901: generating an asymmetric key pair composed of a software upgrade public key and a software upgrade private key and sending the software upgrade public key to the vehicle side. See step S701 of the embodiment shown in Fig. 7 for details, which will not be repeated here.

Step S1001: receiving the software upgrade public key sent by the network side. See step S801 of the embodiment shown in Fig. 7 for details, which will not be repeated here.

Step S1002: obtaining a software upgrade version and a current software version, and comparing the software upgrade version and the current software version to obtain a software upgrade rollback flag used to indicate whether the task is a lower-version software upgrade task. See step S602 of the embodiment shown in Fig. 6 for details, which will not be repeated here.

Step S1003: upon determining, based on the software upgrade rollback flag, to upgrade to lower version software, receiving certification information for upgrade certification, signature certification information, and a software upgrade package, which are input offline by a user.

Exemplarily, referring again to Fig. 3, when the vehicle-side authentication unit determines that authentication is required, the authentication unit prompts the user through a display module to input the certification information CERT_INFO, the signature certification information SIG_CERT_INFO, and the software upgrade package.

It should be noted that the certification information CERT_INFO, the signature certification information SIG_CERT_INFO, and the software upgrade package are obtained by the user from the network side. The user may input the software upgrade task from the vehicle side into the network side. After obtaining data such as the signature certification information SIG_CERT_INFO, the upgrade unit on the network side provides the encrypted certification information ENC_CERT_INFO, the certification information CERT_INFO, and the software upgrade package to the user in an offline manner.

Accordingly, in an offline scenario, a lower-version legitimate upgrade is performed by receiving the certification information, the signature certification information, and the software upgrade package input by the user.

Step S1004: decrypting the signature certification information based on the software upgrade public key to obtain the digest certification information, performing a digest operation on the certification information to obtain new digest certification information, and extracting the first software upgrade count from the certification information. See step S804 of the embodiment shown in Fig. 7 for details, which will not be repeated here.

Step S1005: upon determining that the OTA upgrade is legitimate based on a magnitude relationship between the first software upgrade count and a second software upgrade count stored on the vehicle side as well as a corresponding relationship between the new digest certification information and the digest certification information, upgrading to the lower-version software using the software upgrade package. See step S805 of the embodiment shown in Fig. 7 for details, which will not be repeated here.

An OTA upgrade method according to embodiments of the present application is further described in detail below in conjunction with multiple application scenarios. The OTA upgrade method may be applied to the OTA upgrade system shown in Fig. 3.

### 1) Using a symmetric cryptographic algorithm

The certification unit generates a software upgrade master key, which is used to perform a secure operation on software information SOFT_INFO input by the upgrade unit based on an encryption algorithm, to obtain a rollback service key OTA_RE_KEY for a current software version. The rollback service key OTA_RE_KEY is used to verify the legitimacy of an upgrade version and protect upgrade permissions.

The upgrade unit is configured to manage and deliver an upgrade software version. When determining that the software upgrade version is lower than the current vehicle software version, it generates a software upgrade rollback flag RE_OTA_FLAG.

Optionally, the upgrade unit generates certification information CERT_INFO, encrypts CERT_INFO using OTA_RE_KEY to obtain encrypted certification information ENC_CERT_INFO, and then delivers a software upgrade package, the encrypted certification information ENC_CERT_INFO, the certification information CERT_INFO, and the software upgrade rollback flag RE_OTA_FLAG to the vehicle-side authentication unit.

Scenario 1: During an online software upgrade process, this scenario typically occurs after users' vehicles are already on the market. When new-version software exhibits instability during an upgrade to the new-version software, it becomes necessary to perform a large-scale upgrade of mass-produced vehicle models to a lower version. The vehicle-side authentication unit determines a software upgrade version. If the upgrade version of the software to be upgraded is higher than a current software version, the upgrade is allowed to proceed. If the upgrade version is lower than the current software version, the software information SOFT_INFO is extracted, and a secure operation is performed on the software information SOFT_INFO based on a symmetric encryption algorithm using the pre-set software upgrade master key OTA_MASTER_KEY. The operation is performed using the same method as that by which the certification unit generates the rollback service key OTA_RE_KEY, to obtain the rollback service key OTA_RE_KEY. The encrypted certification information ENC_CERT_INFO is decrypted using OTA_RE_KEY to obtain CERT_INFO', which is compared with the delivered CERT_INFO. If they are the same, it is determined that this lower-version upgrade is a legitimate act. If they are different, the upgrade is determined to be abnormal, and this upgrade is interrupted.

Scenario 2: During an offline software upgrade process, this scenario is primarily used in a testing phase or for troubleshooting during mass production. It involves authentication for upgrading a single vehicle model to a lower version via offline means such as a USB interface. The vehicle-side authentication unit determines a software upgrade version. If the software upgrade version is lower than or equal to a software version number on the vehicle side, it indicates a special upgrade process, and authentication is required. The authentication module invokes OTA_MASTER_KEY to perform a secure operation on SOFT_VN and RE_OTA_FLAG based on a symmetric encryption algorithm. The operation is performed using the same method as that by which the certification module calculates OTA_RE_KEY, to obtain OTA_RE_KEY. Then a user is prompted through a display interface to input information such as CERT_INFO and ENC_CERT_INFO.

The authentication module invokes OTA_RE_KEY to decrypt the encrypted certification information ENC_CERT_INFO to obtain CERT_INFO', extracts a first software upgrade count OTA_COUNT from CERT_INFO', and compares the first software upgrade count with a second software upgrade count V_OTA_COUNT securely stored in the authentication module. If OTA_COUNT > V_OTA_COUNT, then CERT_INFO' is compared with the delivered CER_INFO. If they are the same, it is determined that this lower-version upgrade is a legitimate act, and at the same time, the value of OTA_COUNT is assigned to V_OTA_ COUNT. If they are not the same, the upgrade is determined to be abnormal, and this upgrade is interrupted. If OTA_COUNT≤V_OTA_COUNT, the upgrade is determined to be illegitimate, and the upgrade is terminated.

### 2) Using an asymmetric cryptographic algorithm

When receiving a software upgrade task, the upgrade unit increments a counter OTA_COUNT that indicates a software upgrade count by 1, and then determines a software upgrade version number. If the software upgrade version number is higher than a current software version, the upgrade unit sets the software upgrade rollback flag RE_OTA_FLAG to 0. If the software upgrade version number is lower than or equal to the current software version, the upgrade unit sets RE_OTA_FLAG to 1, and then sends certification information CERT_INFO for certification to the certification module in the certification unit.

The certification module performs a digest operation on the certification information CERT_INFO to obtain digest certification information DIG_CERT_INFO. A digest operation algorithm used may be any commonly used and secure digest algorithm, such as SHA256, SM3, etc. Then, the certification module invokes a software upgrade private key OTA_MASTER_KEY_S to perform a secure operation on the digest certification information DIG_CERT_INFO based on an asymmetric encryption algorithm, to obtain signature certification information SIG_CERT_INFO, and then returns SIG_CERT_INFO to the upgrade unit.

Scenario 3: During an online software upgrade, this scenario typically occurs after users' vehicles are already on the market. When new-version software exhibits instability during an upgrade to the new-version software, it becomes necessary to perform a large-scale upgrade of mass-produced vehicle models to a lower version. After receiving SIG_CERT_INFO, the upgrade unit delivers SIG_CERT_INFO, CERT_INFO, a software upgrade package, a software upgrade rollback flag RE_OTA_FLAG, etc. to the vehicle-side authentication unit via an OTA channel.

When the vehicle-side authentication unit determines that RE_OTA_FLAG=0, it indicates a normal upgrade process, and the process is allowed to proceed. When RE_OTA_FLAG=1, it indicates a special upgrade process, and authentication is required. When the vehicle-side authentication unit determines that authentication is required, the authentication module invokes OTA_MASTER_KEY_P to decrypt SIG_CERT_INFO to obtain DIG_CERT_INFO, and then performs a digest operation on the received CERT_INFO to obtain DIG_CERT_INFO'. The digest operation is performed using the same method as the algorithm used by the certification module. Then, DIG_CERT_INFO' is compared with DIG_CERT_INFO to determine whether they are the same. If they are different, the upgrade is terminated. If they are the same, OTA_COUNT is extracted from CERT _INFO, and compared with V_OTA_COUNT securely stored in the authentication module. If OTA_COUNT>V_OTA_COUNT, it is determined that this lower-version upgrade is a legitimate act, and the value of OTA_COUNT is assigned to V_OTA_COUNT. If OTA_COUNT ≤ V_OTA_COUNT, the upgrade is determined to be illegitimate, and the upgrade is terminated.

Scenario 4: During an offline software upgrade process, this scenario is primarily used in a testing phase or for troubleshooting during mass production. It involves authentication for upgrading a single vehicle model to a lower version via offline means such as a USB interface. After receiving SIG_CERT_INFO, the upgrade unit provides information such as SIG_CERT_INFO to a user in an offline manner.

The vehicle-side authentication unit determines the software upgrade version. If the software upgrade version is higher than the current software version, it indicates a normal upgrade process, and the process is allowed to proceed. If the software upgrade version is lower than or equal to the current software version, it indicates a special upgrade process, and authentication is required. When the vehicle-side authentication unit determines that authentication is required, the authentication unit prompts the user through a display module to input information such as CERT_INFO, SIG_CERT_INFO, etc.

The authentication module invokes OTA_MASTER_KEY_P to decrypt SIG_CERT_INFO, to obtain DIG_CERT_INFO, and then performs a digest operation on the received CERT_INFO to obtain DIG_CERT_INFO'. The digest operation is performed using the same method as the algorithm used by the certification module. Then, DIG_CERT_INFO' is compared with DIG_CERT_INFO to determine whether they are the same. If they are different, the upgrade is terminated. If they are the same, OTA_COUNT is extracted from CERT _INFO, and compared with V_OTA_COUNT securely stored in the authentication module. If OTA_COUNT>V_OTA_COUNT, it is determined that this lower-version upgrade is a legitimate act, and the value of OTA _COUNT is assigned to V_OTA_COUNT. If OTA_COUNT ≤ V_OTA_COUNT, the upgrade is determined to be illegitimate, and the upgrade is terminated.

Embodiments of the present application provide a secure OTA upgrade system for upgrading to lower-version software. The system is used to address the issue of preventing unauthorized users from illegally upgrading to lower-version software by exploiting known vulnerabilities in the lower-version software when new-version software has quality problems and upgrading to the lower-version software is necessary, and providing security protection against unauthorized low-version software upgrades in both online and offline upgrade scenarios.

Embodiments of the present application further provide a computer device, which may be applied to network side.

Referring to Fig. 9, which is a schematic structural diagram of a computer device according to an optional embodiment of the present application, as shown in Fig. 9, the computer device includes: one or more first processors 10, a first memory 20, and interfaces for connecting various components, including a high-speed interface and a low-speed interface. The components are communicatively connected to each other through different buses, and may be mounted on a common motherboard or otherwise mounted as needed. The processor may process instructions executed in the computer device, including instructions stored in or on the memory to display on external input/output means (e.g., a display device coupled to the interface) graphical information of a GUI. In some optional implementations, a plurality of processors and/or a plurality of buses may be used with a plurality of memories and a plurality of storage devices if needed. Similarly, a plurality of computer devices may be connected, and the devices provide part of necessary operations (e.g., as a server array, a group of blade servers, or a multiprocessor system). One first processor 10 is used as an example in Fig. 9.

The first processor 10 may be a central processing unit, a network processing unit, or a combination thereof. The first processor 10 may also include a hardware chip. The above-mentioned hardware chip may be an application-specific integrated circuit, a programmable logic device, or a combination thereof. The above-mentioned programmable logic device may be a complex programmable logic device, a field programmable logic gate array, a generic array logic, or any combination thereof.

The first memory 20 stores instructions executable by at least one first processor 10, to cause the at least one processor 10 to implement the method illustrated in the above-described embodiment.

The first memory 20 may include a program storing area and a data storing area, wherein the program storing area may store an operating system, and an application program required for at least one function; and the data storing area may store data created according to the use of the computer device, and the like. In addition, the first memory 20 may include a high-speed random access memory, and may also include a non-transitory memory, such as at least one magnetic disk storage device, flash memory device, or other non-transitory solid-state storage device. In some optional implementations, the first memory 20 optionally includes memories provided remotely from the first processor 10, and these remote memories may be connected to the computer device through a network. Examples of the above-mentioned network include, but are not limited to, the Internet, an intranet, a local area network, a mobile communication network, and combinations thereof.

The first memory 20 may include volatile memory, such as a random access memory; or the memory may include non-volatile memory, such as flash memory, a hard disk or a solid-state drive; or the first memory 20 may include a combination of the above-mentioned types of memory.

The computer device further includes input means 30 and output means 40. The first processor 10, the first memory 20, the input means 30 and the output means 40 may be connected via a bus or by other means. Connection via a bus is used in Fig. 9 as an example.

The input means 30 may receive input numerical or character information and generate key signal inputs related to user settings and functional control of the computer device, such as a touch screen, keypad, mouse, trackpad, touchpad, pointer stick, one or more mouse buttons, trackball, joystick, and the like. The output means 40 may include a display device, an auxiliary lighting device (e.g., an LED), and a haptic feedback device (e.g., a vibration motor), and the like. The above-mentioned display device includes, but is not limited to, a liquid crystal display, a light-emitting-diode display, and a plasma display. In some optional implementations, the display device may be a touch screen.

Embodiments of the present disclosure further provide a vehicle. Referring to Fig. 10, which is a schematic structural diagram of a vehicle according to an optional embodiment of the present application, as shown in Fig. 10, the vehicle includes: one or more second processors 50, a second memory 60, and interfaces for connecting various components, including a high-speed interface and a low-speed interface. The vehicle further includes second input means 70 and second output means 80. The second processor 50, the second memory 60, the second input means 70 and the second output means 80 may be connected via a bus or by other means. Connection via a bus is used in Fig. 10 as an example. Regarding a communication process among the second processor 50, the second memory 60, the second input means 70, and the second output means 80 in the vehicle, reference may be made to the above description of the computer device, and it will not be repeated here.

Embodiments of the present application further provide a computer-readable storage medium. The above-described method according to embodiments of the present application may be implemented in hardware or firmware, or implemented as computer code that may be recorded on a storage medium, or implemented as computer code that is downloaded over a network and originally stored on a remote storage medium or non-transitory machine-readable storage medium, and that is to be stored on a local storage medium, such that the method described here may be processed by such software stored on a storage medium that uses a general purpose computer, a dedicated processor, or programmable or dedicated hardware. The storage medium may be a magnetic disk, optical disk, read-only memory, random access memory, flash memory, hard disk, solid-state drive, or the like. Optionally, the storage medium may also include a combination of the above-mentioned types of memory. It may be appreciated that the computer, processor, microprocessor, controller, or programmable hardware includes a storage component that may store or receive software or computer code, and when the software or computer code is accessed and executed by the computer, processor, or hardware, the method illustrated in the above embodiment is implemented.

Part of the present application may be applied as a computer program product, such as computer program instructions, which, when executed by a computer, may invoke or provide the method and/or technical solution according to the present application through operation of the computer. Those skilled in the art should understand that forms of the computer program instructions in the computer-readable medium include, but are not limited to, a source file, an executable file, an installer package, and the like, and accordingly, ways in which the computer program instructions are executed by the computer include, but are not limited to: the computer directly executing the instructions, or the computer compiling the instructions and then executing a corresponding compiled program, or the computer reading and executing the instructions, or the computer reading and installing the instructions and then executing a corresponding installed program. Here, the computer-readable medium may be any available computer-readable storage medium or communication medium accessible to a computer.

Although the embodiments of the present application are described with reference to the accompanying drawings, those skilled in the art may make various modifications and variations without departing from the spirit and scope of the present application, and such modifications and variations fall within the scope defined by the appended claims.

## Claims

1. An over-the-air upgrade method, **characterized in that** the method is applied to a network side, the method comprising:
generating a software upgrade key and sending the software upgrade key to a vehicle side;
upon receiving a software upgrade task sent by the vehicle side, updating a first software upgrade count, and detecting whether the software upgrade task is a lower-version software upgrade task to obtain a software upgrade rollback flag;
encrypting upgrade information comprising the first software upgrade count using the software upgrade key to generate encrypted upgrade information; and
sending the upgrade information, the encrypted upgrade information, the software upgrade rollback flag, and a software upgrade package corresponding to the software upgrade task to the vehicle side, wherein:
the vehicle side, upon determining, based on the software upgrade rollback flag, to upgrade to lower-version software, decrypts the encrypted upgrade information based on the software upgrade key to obtain new upgrade information and the first software upgrade count, and upon determining that the over-the-air (OTA) upgrade is legitimate based on a magnitude relationship between the first software upgrade count and a second software upgrade count stored on the vehicle side as well as a corresponding relationship between the new upgrade information and the upgrade information, upgrades to the lower-version software using the software upgrade package.

2. The method according to claim 1, **characterized in that** the software upgrade key comprises a software upgrade master key; the upgrade information further comprises software information and certification information for upgrade certification, and the encrypted upgrade information comprises encrypted certification information; and encrypting upgrade information comprising the first software upgrade count using the software upgrade key to generate encrypted upgrade information comprises:
generating the certification information based on the software upgrade count;
performing symmetric encryption on the software information using the software upgrade master key to obtain a rollback service key, wherein the software information is generated based on a software upgrade version corresponding to the software upgrade task, a current software version, and the software upgrade rollback flag; and
performing symmetric encryption on the certification information using the rollback service key to obtain the encrypted certification information.

3. The method according to claim 2, **characterized in that** sending the upgrade information, the encrypted upgrade information, the software upgrade rollback flag, and a software upgrade package corresponding to the software upgrade task to the vehicle side comprises:
sending the software information, the certification information, the encrypted certification information, the software upgrade rollback flag, and the software upgrade package corresponding to the software upgrade task to the vehicle side, wherein: the vehicle side, upon determining, based on the software upgrade rollback flag, to upgrade to the lower-version software, decrypts the encrypted certification information based on the software upgrade master key and the software information, and extracts the first software upgrade count based on new certification information obtained through the decryption, and upon determining that the OTA upgrade is legitimate based on the magnitude relationship between the first software upgrade count and the second software upgrade count stored on the vehicle side as well as the corresponding relationship between the new certification information and the certification information, upgrades to the lower-version software using the software upgrade package.

4. The method according to claim 2, **characterized in that** generating a software upgrade key and sending the software upgrade key to a vehicle side comprises:
upon receiving a public key sent by the vehicle side, generating the software upgrade master key and a transmission protection key;
performing asymmetric encryption on the transmission protection key using the public key to obtain a ciphertext transmission protection key, and performing symmetric encryption on the software upgrade master key based on the ciphertext transmission protection key to obtain a ciphertext software upgrade master key; and
sending the ciphertext software upgrade master key and the ciphertext transmission protection key to the vehicle side, so that the vehicle side decrypts the ciphertext transmission protection key using a private key corresponding to the public key to obtain the transmission protection key, and decrypts the ciphertext software upgrade master key based on the transmission protection key to obtain the software upgrade master key.

5. The method according to claim 1, **characterized in that** the software upgrade key comprises an asymmetric key pair composed of a software upgrade public key and a software upgrade private key; the upgrade information further comprises certification information for upgrade certification and digest certification information, and the encrypted upgrade information comprises signature certification information; and encrypting upgrade information comprising the first software upgrade count using the software upgrade key to generate encrypted upgrade information comprises:
generating the certification information based on the software upgrade count; and
performing a digest operation on the certification information to obtain the digest certification information, and performing asymmetric encryption on the digest certification information using the software upgrade private key to obtain the signature certification information.

6. The method according to claim 5, **characterized in that** sending the upgrade information, the encrypted upgrade information, the software upgrade rollback flag, and a software upgrade package corresponding to the software upgrade task to the vehicle side comprises:
sending the certification information, the signature certification information, the software upgrade rollback flag, and the software upgrade package corresponding to the software upgrade task to the vehicle side, wherein: the vehicle side, upon determining, based on the software upgrade rollback flag, to upgrade to the lower-version software, =decrypts the signature certification information based on the software upgrade public key to obtain the digest certification information, performs a digest operation on the certification information to obtain new digest certification information, and extracts the first software upgrade count from the certification information, and upon determining that the OTA upgrade is legitimate based on the magnitude relationship between the first software upgrade count and the second software upgrade count stored on the vehicle side as well as the corresponding relationship between the new digest certification information and the digest certification information, upgrades to the lower-version software using the software upgrade package.

7. The method according to claim 1, **characterized in that** upon receiving a software upgrade task sent by the vehicle side, updating a first software upgrade count, and detecting whether the software upgrade task is a lower-version software upgrade task to obtain a software upgrade rollback flag comprises:
upon receiving the software upgrade task, incrementing the first software upgrade count by one, and obtaining a software upgrade version and a current software version based on the software upgrade task;
if the software upgrade version is detected to be not higher than the current software version, determining that the software upgrade task is a lower-version software upgrade task, and setting the software upgrade rollback flag to one; and
if the software upgrade version is detected to be not higher than the current software version, determining that the software upgrade task is not a lower-version software upgrade task, and setting the software upgrade rollback flag to zero.

8. An over-the-air upgrade method, **characterized in that** the method is applied to a vehicle side, the method comprising:
receiving a software upgrade key sent by a network side;
sending a software upgrade task to the network side, and receiving upgrade information, encrypted upgrade information, a software upgrade rollback flag, and a software upgrade package corresponding to the software upgrade task, which are returned by the network side, wherein the encrypted upgrade information is obtained by encrypting the upgrade information comprising a first software upgrade count by the network side using the software upgrade key; the first software upgrade count is obtained by updating a current software upgrade count by the network side after receiving the software upgrade task; and the software upgrade rollback flag is obtained by detecting whether the software upgrade task is a lower-version software upgrade task by the network side;
upon determining, based on the software upgrade rollback flag, to upgrade to lower-version software, decrypting the encrypted upgrade information based on the software upgrade key to obtain new upgrade information and the first software upgrade count stored on the network side; and
upon determining that the over-the-air (OTA) upgrade is legitimate based on a magnitude relationship between the first software upgrade count and a second software upgrade count stored on the vehicle side as well as a corresponding relationship between the new upgrade information and the upgrade information, upgrading to the lower-version software using the software upgrade package.

9. The method according to claim 8, **characterized in that** the software upgrade key comprises a software upgrade master key; the upgrade information further comprises software information and certification information for upgrade certification, and the encrypted upgrade information comprises encrypted certification information;
receiving upgrade information, encrypted upgrade information, a software upgrade rollback flag, and a software upgrade package corresponding to the software upgrade task, which are returned by the network side comprises:
receiving the software information, the certification information, the encrypted certification information, the software upgrade rollback flag, and the software upgrade package corresponding to the software upgrade task, which are returned by the network side; and
decrypting the encrypted upgrade information based on the software upgrade key to obtain new upgrade information and the first software upgrade count stored on the network side comprises:
performing symmetric encryption on the software information based on the software upgrade master key to obtain a rollback service key; and
decrypting the encrypted certification information using the rollback service key to obtain decrypted new certification information, and extracting the first software upgrade count stored on the network side from the new certification information.

10. The method according to claim 9, **characterized in that** before upgrading to the lower-version software using the software upgrade package, the method further comprises:
if the first software upgrade count is detected to be greater than the second software upgrade count, determining whether the new certification information is consistent with the certification information;
if the new certification information is detected to be consistent with the certification information, determining that the OTA upgrade is legitimate, assigning the value of the first software upgrade count to the second software upgrade count, and performing a step of upgrading to the lower-version software using the software upgrade package; and
if the new certification information is detected to be inconsistent with the certification information, or if the first software upgrade count is detected to be not greater than the second software upgrade count, stopping the upgrade.

11. The method according to claim 10, **characterized in that** after receiving the software upgrade key sent by the network side, the method further comprises:
obtaining a software upgrade version and a current software version, and comparing the software upgrade version and the current software version to obtain the software upgrade rollback flag used to indicate whether the software upgrade task is a lower-version software upgrade task;
upon determining, based on the software upgrade rollback flag, to upgrade to a lower version, performing symmetric encryption on the software upgrade version, the current software version, and the software upgrade rollback flag to obtain the rollback service key, and receiving the certification information for upgrade certification, the encrypted certification information, and the software upgrade package, which are input offline by a user, wherein the certification information, the encrypted certification information, and the software upgrade package are obtained by the user from the network side; and
performing a step of decrypting the encrypted certification information using the rollback service key to obtain decrypted new certification information, and subsequent steps.

12. The method according to claim 8, **characterized in that** the software upgrade key comprises an asymmetric key pair composed of a software upgrade public key and a software upgrade private key; the upgrade information further comprises certification information for upgrade certification and digest certification information, and the encrypted upgrade information comprises signature certification information;
receiving upgrade information, encrypted upgrade information, a software upgrade rollback flag, and a software upgrade package corresponding to the software upgrade task, which are returned by the network side comprises:
receiving the certification information, the signature certification information, the software upgrade rollback flag, and the software upgrade package corresponding to the software upgrade task, which are returned by the network side; and
decrypting the encrypted upgrade information based on the software upgrade key to obtain new upgrade information and the first software upgrade count stored on the network side comprises:
decrypting the signature certification information based on the software upgrade public key sent by the network side to obtain the digest certification information, performing a digest operation on the certification information to obtain new digest certification information, and extracting the first software upgrade count from the certification information.

13. The method according to claim 12, **characterized in that** before upgrading to the lower-version software using the software upgrade package, the method further comprises:
if the new digest certification information is detected to be consistent with the digest certification information, determining whether the first software upgrade count is greater than the second software upgrade count;
if the first software upgrade count is detected to be greater than the second software upgrade count, determining that the OTA upgrade is legitimate, assigning the value of the first software upgrade count to the second software upgrade count, and performing a step of upgrading to the lower-version software using the software upgrade package; and
if the first software upgrade count is detected to be not greater than the second software upgrade count, or if the new digest certification information is detected to be inconsistent with the digest certification information, stopping the upgrade.

14. The method according to claim 13, **characterized in that** after receiving the software upgrade public key sent by the network side, the method further comprises:
obtaining a software upgrade version and a current software version, and comparing the software upgrade version and the current software version to obtain the software upgrade rollback flag used to indicate whether the software upgrade task is a lower-version software upgrade task; and
upon determining, based on the software upgrade rollback flag, to upgrade to a lower version, receiving the certification information for upgrade certification, the signature certification information, and the software upgrade package, which are input offline by a user, and performing a step of decrypting the signature certification information based on the software upgrade public key sent by the network side to obtain the digest certification information, and subsequent steps, wherein the certification information, the signature certification information, and the software upgrade package are obtained by the user from the network side.

15. An over-the-air upgrade system, **characterized in that** the system comprises a network side and a vehicle side;
the network side is configured to generate a software upgrade key and send the software upgrade key to the vehicle side; upon receiving a software upgrade task sent by the vehicle side, update a first software upgrade count, and detect whether the software upgrade task is a lower-version software upgrade task to obtain a software upgrade rollback flag; encrypt upgrade information comprising the first software upgrade count using the software upgrade key to generate encrypted upgrade information; and send the upgrade information, the encrypted upgrade information, the software upgrade rollback flag, and a software upgrade package corresponding to the software upgrade task to the vehicle side; and
the vehicle side is configured to, upon determining, based on the software upgrade rollback flag, to upgrade to lower-version software, decrypt the encrypted upgrade information based on the software upgrade key to obtain new upgrade information and the first software upgrade count, and upon determining that the over-the-air (OTA) upgrade is legitimate based on a magnitude relationship between the first software upgrade count and a second software upgrade count stored on the vehicle side as well as a corresponding relationship between the new upgrade information and the upgrade information, upgrade to the lower-version software using the software upgrade package.

16. A computer device, **characterized by** comprising:
a first memory and a first processor communicatively connected to each other, wherein the first memory stores first computer instructions, which are executed by the first processor to perform the OTA upgrade method according to any one of claims 1 to 7.

17. A vehicle, **characterized by** comprising:
a second memory and a second processor communicatively connected to each other, wherein the second memory stores second computer instructions, which are executed by the second processor to perform the OTA upgrade method according to any one of claims 8 to 14.
